# EUROPEAN PATENT APPLICATION

(11) **EP 1 028 135 A1**
(43) Date of publication of application: **16.08.2000**
(21) Application number: 99124844.4
(22) Date of filing: 15.12.1999
(51) Int. Cl.: C08G 18/80, C08G 18/79

(54) **Method for making 1,2,4-Triazole blocked polyisocyanate crosslinkers, coating compositions and coatings prepared therefrom**

(30) Priority: 28.12.1998 US 221386
(71) Applicant: Bayer Corporation, Pittsburgh, PA 15205-9741 (US)
(72) Inventor: Yonek, Kenneth P., McMurray, PA 15317 (US); Venham, Lanny D., Oakdale, PA 15071 (US); Jeffries, Michael K., Follansbee, WV 26037 (US)
(74) Representative: Pettrich, Klaus-Günter, Dr.

(57) **Abstract**

A solvent-free method for making a powder crosslinker for a polyurethane powder coating composition by reacting (a) certain bis(4-isocyanatocyclohexyl) methane derivatives (or mixtures of bis(4-isocyanatocyclohexyl) methane derivatives) and (b) 1,2,4-triazole under conditions which produce a processing melt that is entirely a liquid at a temperature of about 150°C or less. The invention is also directed to a polyurethane powder coating composition and coatings made with the powder crosslinker.

## Description

### FIELD OF THE INVENTION

The invention relates to the field of polyurethane powder coating compositions.

### BACKGROUND OF THE INVENTION

It is known that polyurethane powder coating compositions can be prepared by compounding and pulverizing mixtures of high-melting polyhydroxy compounds and blocked polyisocyanates.

There has been a long felt need to develop a method for making a polyurethane powder crosslinker (a blocked polyisocyanate component capable of crosslinking) which meets the following criteria. First, the method should produce a coating composition that exhibits a high latent isocyanate content, a high reactivity, and which exhibit excellent leveling properties. Second, the blocking agent should satisfy the requirements of (i) a low unblocking temperature of 130°C to 150°C (ii) low thermal yellowing of the resulting polyurethane coating and (iii) low cost. Third, the powder crosslinker should provide a unique combination of flexibility, toughness, e.g., tear resistance, and hardness, to the resulting coating it forms.

Fourth, and most importantly, the powder crosslinker should be easily made such that the entire processing melt that results after reaction of the polyisocyanate component and the 1,2,4-triazole is a single liquid phase. This is important so that the melt can be processed easily. If the processing melt contains any appreciable amount of a solid reaction product with a melting point that is above the deblocking temperature of the blocking agent, the processing melt cannot be used because the blocked polyisocyanate component becomes unblocked as the temperature is raised to keep the processing melt in a liquid state.

Unfortunately, it has been difficult to develop a method which meets these requirements. The most commonly used methods have utilized ε ε-caprolactam blocked adducts that are based on isophorone diisocyanate (IPDI). The use of ε-caprolactam has proven to be undesired because it has a relatively high deblocking temperature, e.g., 170°C or higher.

Of numerous blocking agents, 1,2,4-triazole is the only blocking agent which satisfies the requirements of (i) a low unblocking temperature of 130°C to 150°C (ii) low thermal yellowing of the resulting polyurethane coating and (iii) low cost. 1,2,4-triazole, however, suffers from the disadvantage that polyisocyanates blocked with this compound tend to crystallize. Applications in which 1,2,4-triazole has been used as a polyisocyanate blocking agent have been primarily directed to the making of solvent-based compositions. Solvent-based compositions and powder compositions are fundamentally different and these applications do not address the specific concerns involved in the making of a suitable powder composition. It is well known, for instance, that a polyisocyanate component that is useful in solvent-based compositions does not necessarily mean it can be used in powder compositions. This is because powder compositions require different flow behavior and storage stability properties than solvent-based systems.

U.S. Patent No. 4,482,721 discloses the preparation of powder lacquer binders containing 1,2,4-triazole-blocked polyisocyanates. The patent encourages the use of NCO prepolymers in which the NCO:OH ratio used is up to 20:1. The patent discloses that crystallization which forms during the preparation of the blocked polyisocyanate should be removed by distillation. The patent, however, does not provide any guidance about how to make powder compositions based on polyisocyanates having multicyclic groups, or from mixtures containing bis(4-isocyanatocyclohexyl) methane derivatives.

U.S. Pat. No. 5,777,061 discloses a powder coating composition containing a fluorine-containing polyisocyanate component and a polyhydroxyl component containing one or more high molecular polyols. The patent discloses numerous polyisocyanates which can be used for the polyisocyanate component. Bis(4-isocyanatocyclohexyl) methane is a possible polyisocyanate. The polyisocyanate component can also include polyisocyanate adducts that are prepared from monomeric diisocyanates and contain isocyanurate, uretdione, biuret, urethane, allophanate, carbodiimide and/or oxadiazinetrione groups. The patent discloses a laundry list of blocking agents, 1,2,4-triazole among them. Although bis(4-isocyanatocyclohexyl) methane and 1,2,4-triazole are mentioned in the patent, there is no suggestion of a method with the above-mentioned criteria. There is no suggestion of using bis(4-isocyanatocyclohexyl) methane adducts based on linear diols such as 1,6-hexanediol, ethylene glycol, 1,4-butanediol, and trimethylol propane. There is no suggestion of using bis(4-isocyanatocyclohexyl) methane adducts based on bis(4-isocyanatocyclohexyl) methane isocyanurates and hexamethylene diisocyanate isocyanurates.

It would be highly desired to develop an improved method for making polyurethane powder coating compositions.

### SUMMARY OF THE INVENTION

The invention is directed to a solvent-free method for making a powder crosslinker for a polyurethane powder coating composition by reacting (a) a bis(4-isocyanatocyclohexyl) methane derivative (or mixtures containing bis(4-isocyanatocyclohexyl) methane derivatives) and (b) 1,2,4-triazole under conditions which produce a processing melt that is entirely a liquid at a temperature of about 150°C or less. The liquid melt is then cooled, and the resulting resin is pulverized to form the powder crosslinker. The invention is also directed to a polyurethane powder coating composition containing the powder crosslinker, and the coating made with the powder crosslinker.

### DETAILED DESCRIPTION OF THE INVENTION

The invention is based on the discovery that by controlling certain parameters, the reaction of 1,2,4-triazole and a bis(4-isocyanatocyclohexyl) methane derivative, (or mixtures of polyisocyanates containing bis(4-isocyanatocyclohexyl) methane derivatives) produces a processing melt that is entirely a single liquid phase at less than 150°C. The phrase "processing melt" herein refers to the composition which is obtained immediately after the bis(4-isocyanatocyclohexyl) methane derivative, (or mixtures of polyisocyanates containing bis(4-isocyanatocyclohexyl) methane derivatives) and 1,2,4-triazole are mixed in a reaction vessel. The term "solvent-free" herein refers to the method of the invention being practiced without any appreciable amount of solvent, preferably none. The discovery is remarkable because prior to this discovery, our efforts to develop 1,2,4-triazole blocked crosslinkers based on bis(4-isocyanatocyclohexyl) methane derivatives resulted in processing melts that contained: (a) a liquid phase containing the blocked bis(4-isocyanatocyclo-hexyl) methane derivative derivative and (b) a solid phase (a top layer) which consisted of crystals. The formation of the solid layer prevented the method from being used commercially because the layer had to be removed manually, e.g., by scraping. The need to manually remove the solid phase complicated the processing of the material so much that the amount of work needed to remove the crystalline material rendered the process prohibitively expensive. Since the solid layer has a melting temperature that is greater than 150°C, (above the deblocking temperature of the 1,2,4-triazole blocked isocyanates), melting the solid layer is not an option.

The powder crosslinkers made in accordance with the invention include a polyisocyanate component and a 1,2,4-triazole component. The polyisocyanate component contains a bis(4-isocyanato-cyclohexyl) methane derivative. Generally, the bis(4-isocyanatocyclo-hexyl) methane derivative is the reaction product of bis(4-isocyanatocyclohexyl) methane and an isocyanate-reactive compound. Bis(4-isocyanatocyclohexyl) methane is a known compound and is sold by Bayer Corporation under the trade name Desmodur W. Bis(4-isocyanatocyclohexyl) methane is also known as hydrogenated MDI (HMDI or H₁₂ MDI), reduced MDI (RMDI) or saturated MDI (SMDI). Hereinafter, bis(4-isocyanatocyclohexyl) methane can be referred to as HMDI. The HMDI derivative generally has a molecular weight that is at least about 300.

In one embodiment, the HMDI derivative is a urethane-containing adduct that is made by reacting HMDI and a hydroxyl-bearing compound. Suitable hydroxyl-bearing compounds used to make the HMDI urethanecontaining adduct include but are not limited to 1,6-hexanediol, ethylene glycol, 1,4-butanediol, trimethylol propane, and the like. The HMDI urethane-containing adduct can be used individually or in combination with an HMDI isocyanurate and/or a 1,6-hexamethylene diisocyanate isocyanurate. The HMDI isocyanurate is made by trimerizing HMDI using a catalyst, such as benzyltrimethyl ammonium hydroxide, to an isocyanate content of about 24% based on N=C=O groups.

The 1,6 hexamethylene diisocyanante (HDI) isocyanurate is made by trimerizing 1, 6 hexamethylene diisocyanate. Generally, the hexamethylene diisocyanate isocyanurate can be made in accordance with U.S. Pat. No. 4,419,513, incorporated herein by reference.

The amount of the HMDI isocyanurate in the powder crosslinker is generally at least about 20 wt%, and preferably from about 40 wt% to about 60 wt%, based on the weight of the polyisocyanate component. The amount of the HDI isocyanurate in the powder crosslinker is generally at least 20%, and preferably from about 40 to about 60 wt%, based on the weight of the polyisocyanate component.

In another embodiment, the HMDI urethane-containing adduct is not used. Rather, the powder crosslinker contains an HMDI isocyanurate (an HMDI derivative) and an HDI isocyanurate. In this embodiment, the amount of the HMDI isocyanurate is from about 20 to about 80 wt.%, and even more preferably from about 40 to about 60 wt.%, based on the weight of the polyisocyanate component. The amount of the HDI isocyanu rate is generally at least 20 wt %, based on the weight of the polyisocyanate component. Preferably, the amount of the HDI isocyanurate is from about 20 to about 80 wt.%, and even more preferably from about 40 to about 60 wt.%, based on the weight of the polyisocyanate component.

Generally, the 1,2,4-triazole component is unsubstituted 1,2,4-triazole. Preferably, only 1,2,4-triazole is used since it is effective and inexpensive. As such, the method is generally practiced with less than about 50 wt%, preferably less than 20 wt%, even more preferably about 0 wt%, and even more preferably 0 wt% additional blocking agents, based on the weight of the polyisocyanate component

To make the blocked powder crosslinker in accordance with the invention, a suitable polyisocyanate component and triazole are selected. In the embodiment in which the HMDI urethane-containing adduct is used, (and HMDI isocyanurates and/or HDI isocyanurates are not used) the ratio of NCO:OH ratio is preferably less than 4:1 and more preferably 2:1. It has been discovered that at equivalent ratios greater than 6:1, the method produces a processing melt that contains a solid top layer. Alternatively, when the polyisocyanate component contains an HMDI isocyanurate and an HDI isocyanurate (but not an HMDI urethane-containing adduct), the weight ratio of the HMDI isocyanurate to the HDI isocyanurate is generally at least 1:1, more preferably from about 3:2 to about 9:1, and even more preferably from about 3:2 to about 4:1. HDI isocyanurate can be obtained commercially from Bayer Corporation under the trade name Desmodur N-3300.

The selection of the polyisocyanate component can be motivated by the specific application that the composition is intended to be used in. Generally, the polyisocyanate component containing an HMDI urethanecontaining adduct (but not HMDI isocyanurates and/or HDI isocyanurates) can be suitable in applications in which it is desired to obtain relatively increased flexibility. A polyisocyanate component containing containing an HMDI isocyanurate and the HDI isocyanurate (but not the HMDI urethane-containing adduct) can be suitable in applications requiring increased functionality and crosslink density.

After the polyisocyanate component and the 1,2,4-triazole have been selected, the components are placed in a reaction vessel. Generally, the order in which the components is added is not critical. For instance, the blocking agent may be initially introduced and the polyisocyanate component to be blocked subsequently added thereto, or vice versa, i.e., the blocking agent may be added to the starting polyisocyanate component, optionally together with the alcohol used to modify the starting polyisocyanate. Alternatively, in some cases (where an HMDI urethanecontaining adduct is used) it has been discovered that first adding the polyol component before the triazole produces excellent results. Once the reactants have been added to the reaction vessel, the reactants are mixed to form a processing melt that is entirely a liquid, single phase, such that it is possible to pour the melt into a suitable cooling tray. Mixing is generally done by conventional batch reactor techniques.

The reaction of the polyisocyanate component and the triazole is preferably carded out without a solvent The blocking reaction is generally carded out at a temperature that ranges from about 80°C to about 150°C. At reaction temperatures above 80°C, the reaction can be carried out in the absence of catalysts. The equipment that is suitable can be any reaction vessel in which the blocked polyisocyanate composition can be prepared. The shape and size of the reaction vessel is not critical.

During processing, it is generally advisable to avoid temperatures that are greater than about 150 °C. The pressure at which the method is practiced is generally atmospheric pressure. Of course, the method can be practiced at pressures above or below atmospheric pressure. The duration of the reaction is generally at least 15-30 minutes, the method is generally carried out at a temperature that ranges from about 120 to about 150 °C.

To obtain powder crosslinkers, the processing melt is then cooled, and the resulting resin is pulverized. The latent (or blocked) NCO-content of the powder crosslinker (triazole blocked polyisocyanates) is generally at least 5 wt%, more preferably from about 10 wt% to about 25 wt%, and even more preferably from about 10 to about 20 wt%, based on the weight of the powder crosslinker. The % of NCO groups blocked with 1,2,4-triazole in the powder crosslinker is generally at least 50 wt%, more preferably from about 70 wt% to about 100 wt%, and even more preferably from about 90 wt% to about 100 wt%, based on the weight of the polyisocyanate component.

To form a powder coating composition, the powder crosslinker is then compounded with a hydroxy-functional compound in sufficient amounts to produce a coating composition. The composition may further contain additives such as pigments, dyes, fillers, and levelling agents. Once the hydroxy-functional component (and any other additional component) have been compounded, the resulting composition is then ground to a fine particle size.

Generally, the powder crosslinker will be present in an amount ranging from about 10 to 80 wt%, based on the weight of the coating composition. Actual amounts for a specific application, however, may vary depending on factors such as the amount of pigments in the composition. Ordinarily, the powder crosslinkers will be made without any fluorine.

Suitable hydroxy-functional compounds include hydroxy-functional polyacrylates and polyester polyols. Examples of hydroxy-functional compounds are disclosed in U.S. Pat. No.4,701,480, and 5,091,475, incorporated herein by reference.

Suitable polyester polyols include reaction products of dihydric alcohols and dibasic carboxylic acids. Instead of free dicarboxylic acids, the corresponding dicarboxylic acid anhydrides or dicarboxylic acid esters of lower alcohols or mixtures thereof may be used for preparing the polyesters. The dicarboxylic acids may be aliphatic, cycloaliphatic, aromatic and/or heterocyclic and they may be substituted, e.g. by halogen atoms, and/or unsaturated. The following are mentioned as examples: succinic acid, adipic acid, suberic acid, azelaic acid, sebacic acid, phthalic acid, isophthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid and dimeric fatty acids such as oleic acid, dimethyl terephthalate and bis-gycoterephthalate. Suitable dihydric alcohols include ethylene glycol, propylene glycol-(1,2) and -(1,3), butylene glycol-(1,4) and -(1,3), hexanediol-(1,6), octanediol-(1,8), neopentyl glycol, cyclohexanedimethanol (1,4-bis-hydroxymethylcyclohexane), 2-methyl-1,3-propane diol, 2,2,4-trimethyl-1,3-pentanediol, triethylene glycol, tetraethylene glycol, polyethylene glycol, dipropylene glycol, polypropylene glycol, dibutylene glycol and polybutylene glycol. The polyesters may also contain a proportion of carboxyl end groups. Polyesters of lactones, e.g., ε-caprolactone, or hydroxycarboxylic acids, e.g., Ω-hydroxycaproic acid, may also be used.

Suitable hydroxy-functional polyacrylates can be made from monomers such as acrylic acid, methacrylic acid, crotonic acid, maleic anhydride, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, glycidyl acrylate, glycidyl methacrylate, 2-isocyanatoethyl acrylate and 2-isocyanatoethyl methacrylate.

In an embodiment in which the powder crosslinker is used in combination with a hydroxy-functional acrylate, it has been discovered that a composition based on hydroxy-functional polyacrylates and a bis(4-isocyanatocyclohexyl) methane adduct based on 1,6-hexane diol produces coatings having excellent properties. It has also been discovered that such a composition contains relatively fewer % of retained blocking agent in the cured film it farms. Also, it has been discovered that films made from such a coating composition exhibit less film defects caused by the escaping 1,2,4-triazole. It is believed that compositions based on other linear dials will produce similar results.

In use, the powder compositions are applied aver a substrate by any suitable means. For instance, the powder compositions can be electrostatically sprayed over a substrate. In the subsequent baking process, the powder melts and flows to form a smooth pore-free coating. Simultaneously, a chemical crosslinking process occurs which transforms the thermoplastic powder into a hard, durable protective coating. The powder coating compositions are typically applied to metal parts and cured by baking at a suitable temperature.

In one embodiment, a powder coating formulation for a clearcoat application can made by melt extruding the blocked polyisocyanate with an OH functional polyester or acrylic resin, along with flow additives, and catalysts. The extrusion is generally carried out at about 100 °C. The latent NCO / OH ratio is from about 0.5 to 1.5, more preferably 0.9 to 1.1, preferably 1.0. The extrudate is ground to a particle size of less than about 50 microns and can be applied by means of an electrostatic spray gun. The coated panel is baked at 150-200 °C for 15-30 minutes.

The invention provides previously unavailable benefits. One advantage of the invention is that it provides a comprehensive system for making powder compositions based on HMDI-derivatives that impart predetermined physical properties to the coatings that are formed by the powder compositions. Also, one practicing the invention can now make the 1,2,4-triazole-blocked crosslinker in a single step without the need to physically separate any solid phases. Further, the lower deblocking temperature at which the polyurethane powder compositions deblocks means that less energy has to be used to make the composition as compared with powder compositions made with known blocking agents. The savings in energy can be significant when tons of the composition are produced over a year.

Also, since the polyurethane powder composition cures at relatively lower temperatures as compared to powder compositions made with ε-caprolactam, the composition can be used in heat-sensitive substrates which could not have been coated with powder compositions made with ε-caprolactam and other blocking agents having higher deblocking temperatures.

The invention is further described but not limited by the following illustrative examples. All parts are by weight unless otherwise indicated.

### EXAMPLE 1

In this example, an adduct made from HMDI and 1,6-hexanediol blocked with 1,2,4-triazole was prepared. A round bottomed flask was charged with Desmodur W (524.8 g, 4.0 equivalents) and the 1,6-hexanediol (118.0 g, 2.0 equivalents). The contents of the flask were then heated to 120°C under a nitrogen atmosphere. We maintained the temperature at 120°C, until the free isocyanate content was 13.1 %. This took about 4 hours. We then added 1,2,4-triazole (146.3 g, 2.12 equivalents) to the flask in about three equal portions. The temperature rose to 135°C due to the exothermic reaction. The temperature was maintained at 135°C for two hours. The product was poured into aluminum trays to cool. This solid material was then ground into a fine powder. The final product had an equivalent weight of 394.5 grams/equivalent.

### EXAMPLE 2

In this example, a HMDI/trimethylol propane (TMP) adduct blocked with 1,2,4-triazole was prepared.

A round bottomed flask was charged with Desmodur W (3,680 g, 28.04 equivalents) and the trimethylol propane (320.0 g, 7.154 equivalents) (- 4:1 NCO/OH ratio). The contents of the flask were then heated to 120°C under a nitrogen atmosphere. We maintained the temperature at 120°C, until the free isocyanate content was 21.6%. This took about 4 hours.

We then weighed 388.5 grams (2.0 equivalents) of this 21.6% NCO prepolymer and 3 drop of dibutyltin dilaurate into a round bottomed flask. We heated the flask under a nitrogen atmosphere to about 80°C and then added 1,2,4-triazole (145.0 g, 2.1 equivalents) to the flask in about three equal portions. The temperature rose to 133°C due to the exothermic reaction. However, solid began to precipitate from the reaction mitre before all of the 1,2,4-triazole could be added. In order to liquefy and homogenize the mixture the temperature was raised to 150°C. Even at this temperature, there were some precipitate present. The temperature was not raised any further, because de-blocking can start to occur above this temperature. The product was poured into aluminum trays to cool. This solid material was then ground into a fine powder. The final product had an equivalent weight of 266.8 grams/equivalent.

### EXAMPLE 3

Preparation of HMDI/TMP adduct, blended with N-3300 and blocked with 1,2,4-triazole. A round bottomed flask was charged with Desmodur W (3,680 g, 28.04 equivalents) and the trimethylol propane (320.0 g, 7.154 equivalents) (∼ 4:1 NCO/OH ratio). The contents of the flask were then heated to 120°C under a nitrogen atmosphere. We maintained the temperature at 120°C, until the free isocyanate content was 21.6%. This took about 4 hours.

We then weighed 320.0 grams (1.65 equivalents) of this 21.6% NCO prepolymer, Desmodur N-3300 (80.0 grams, 0.412 equivalents) (20% by weight of the isocyanate portion) and 3 drop of dibutyltin dilaurate into a round bottomed flask. We heated the flask under a nitrogen atmosphere to about 100°C and then added 1,2,4-triazole (145.0 g, 2.1 equivalents) to the flask in about three equal portions. The temperature rose to 126°C due to the exothermic reaction. The reaction mixture was viscous, but no precipitates were formed. In order to lower the viscosity, the temperature was raised to 145°C. In order to achieve a free NCO content of less than 1%, four more drops of dibutyltin dilaurate were added to the mixture. The product was poured into aluminum frays to cool. This solid material was then ground into a fine powder. The final product had an equivalent weight of 266.8 grams/equivalent.

### EXAMPLE 4

In this example, HMDI/1,6-hexanediol adduct, blended with N-3300 and blocked with 1,2,4-triazole. A twenty-gallon reactor was charged with Desmodur W (49.7 pounds) and the 1,6-hexanediol (11.2 pounds) (∼ 2:1 NCO/OH ratio). The contents of the reactor were then heated to 120°C under a nitrogen atmosphere. We maintained the temperature at 120°C, until the free isocyanate content was 13.0%. This took about 3 hours.

We then added Desmodur N-3300 (18.4 pounds) (23% by weight of the isocyanate portion, 2:1 equivalent ratio of Des W prepolymer to N-3300) to the reactor. The temperature dropped to 112°C, and we then added 1,2,4-triazole (20.7 pounds) to the reactor in about three equal portions. The temperature rose to 140°C due to the exothermic reaction and heating of the reactor. The reaction mixture was viscous, but no precipitates were formed. Because the agitator fell off during this run, the material was discharged into metal cans to cool. The material was broken into chunks a recharged to the reactor, after the agitator was repaired. The reactor was heated to 135°C to melt the material. The material was stirred for two hours at this temperature to ensure the reaction was complete and the material was homogeneous. The product was discharged into metal cans to cool. This solid material was then pulverized. The final product had an equivalent weight of 352.0 grams/equivalent.

### EXAMPLE 5

In this example, a powder crosslinker from HMDI trimer (isocyanurate), blended with N-3300 and blocked with 1,2,4-triazole was made. A round bottomed flask was charged with Desmodur W (4,000.0 g). A nitrogen inlet tube was inserted into the flask, and a slow stream of nitrogen was bubbled through the material for at least 30 minutes. The flask was heated to 70°C, and then 6.0 grams of a catalyst solution was added in portions. The catalyst solution was prepared by mixing 10.0 g of a 40% benzyltrimethylammonium hydroxide solution in methanol with 10.0 g of 1-butanol. The temperature rose due to an exothermic reaction. We maintained the temperature between 70° and 90°C until the desired isocyanate content of approximately 24%, was obtained. The reaction took approximately 1 hour. When the desired isocyanate content was achieved, we added dibutylphosphate (1.6 g) to inactivate the catalyst. We found an isocyanate content of 23.7% by titration.

We took 120 grams (0.676 equivalents) of the trimerized Desmodur W homopolymer and mixed it with Desmodur N-3300 (120.0 grams, 0.62 equivalents) (1:1 weight ratio of Desmodur W trimer to N-3300) in a round bottomed flask. The temperature was set to about 100°C, and we then added 1,2,4-triazole (93.9 grams, 1.36 equivalents) to the flask in about three equal portions. The contents were held at 120°C to 140°C for about two hours. The material processed easily without forming any solids. The product was discharged into metal trays to cool. This solid material was then ground into a powder. The final product had an equivalent weight of 257.8 grams/equivalent.

### COMPARISON EXAMPLE 1

Preparation of HMDI/TMP adduct blocked with 1,2,4-triazole. A round bottomed flask was charged with Desmodur W (419.8 g, 3.2 equivalents) and the trimethylol propane (22.4 g, 0.5 equivalents) (∼ 6:1 NCO/OH ratio). The contents of the flask were then heated to 130°C under a nitrogen atmosphere. We maintained the temperature at 130°C to 140°C, until the free isocyanate content was 26.0%. This took about 4 hours. We then added 1,2,4-triazole (195.8 g, 2.84 equivalents) to the flask in about three equal portions. The temperature rose to 142°C due to the exothermic reaction. The reaction mixture became mostly solid. In order to liquefy and homogenize the mixture the temperature was raised to 152°C It is recommended that these types of reactions should not heated above 150°C, because de-blocking can start to occur above this temperature. The product was poured into aluminum trays to cool. This solid material was then ground into a fine powder. The final product had an equivalent weight of 236.3 grams/equivalent.

### COMPARISON EXAMPLE 2

Preparation of HMDI trimer blocked with 1,2,4-triazole. A Desmodur W trimer (519.6 grams, 3.0 equivalents) prepared as in Example 5 above was weighed into in a round bottomed flask. The temperature was raised to about 120°C while the flask was purged with nitrogen. We then added 1,2,4-triazole (217.6 grams, 3.15 equivalents) to the flask in about three equal portions. The temperature rose to 152°C due to the exothermic reaction. At this temperature, the reactor contents were too viscous to stir effectively. The temperature was raised to 155°C in order to discharge the material into metal trays. It is recommended that these types of reactions should not heated above 150°C, because deblocking can start to occur above this temperature. The cooled product was ground into a powder. The final product had an equivalent weight of 245.7 grams/equivalent.

### COMPARISON EXAMPLE 3

Preparation of HMDI trimer, blended with N-3300 and blocked with 1,2,4-triazole. The Desmodur W trimer (26.9 grams, 0.15 equivalents) prepared as in Example 5 above was weighed into in a round bottomed flask and mixed it with Desmodur N-3300 (242.5 grams, 1.25 equivalents) (1:9 weight ratio of Desmodur W trimer to N-3300) in a round bottomed flask. The temperature was set to about 100°C, and we then added 1,2,4-triazole (101.7 grams, 1.47 equivalents) to the flask in about three equal portions. The temperature rose to 145°C due to the exothermic reaction. The contents were held at 120°C for about one hour. The material processed easily without forming any solids. The product was discharged into metal trays to cool. This solid material was then ground into a powder. However, the powder fused back together within one day. The powder is commercially unacceptable, because of this lack of storage stability. The final product had an equivalent weight of 265.1 grams/equivalent.

Although the invention has been described in detail in the foregoing for the purpose of illustration, it is to be understood that such detail is for that purpose and that variations can be made therein by those skilled in the art without departing from the spirit and scope of the invention.

## Claims

1. A solvent-free method for making a 1,2,4-triazole blocked powder crosslinker based on a bis(4-isocyanatocyclohexyl) methane derivative comprising:
(1) reading (a) a polyisocyanate component containing a bis(4-isocyanatocyclohexyl) methane derivative and (b) a1,2,4-triazole component under conditions which produce a processing melt that is entirely a liquid at a temperature of about 150°C or less; and
(2) cooling the melt into a resin and pulverizing the resin to form the powder crosslinker.

2. The method of Claim 1, wherein the polyisocyanate component comprises an adduct formed by reacting bis(4-isocyanatocyclohexyl) methane and a hydroxyl-bearing component.

3. The method of Claim 2, wherein the hydroxyl-bearing component comprises a component selected from the group consisting of 1,6-hexanediol, ethylene glycol, 1,4-butanediol, trimethylol; wherein the equivalent ratio of the bis(4-isocyanatocyclohexyl) methane to the hydroxyl-bearing component is less than about 6:1.

4. The method of Claim 2, wherein the (a) polyisocyanate component and the (b) 1,2,4-triazole are further reacted with (c) hexamethylene diisocyanate isocyanurate.

5. The method of Claim 4, wherein the polyisocyanate component, the 1,2,4-triazole and the hexamethylene diisocyanate isocyanurate are further reacted with a bis(4-isocyanatocyclohexyl) methane isocyanurate.

6. The method of Claim 1, wherein the polyisocyanate component comprises a bis(isocyanatocyclohexyl) methane isocyanurate and an hexamethylene diisocyanate isocyanurate, wherein the weight ratio of the bis(isocyanatocyclohexyl) methane isocyanurate to the hexamethylene diisocyanate isocyanurate ranges from about 3:2 to about 9:1.

7. The entirely liquid processing melt formed by the method of Claim 1.

8. The powder crosslinker formed by the method of Claim 2.

9. The powder crosslinker formed by the method of Claim 5.

10. A 1,2,4-triazole-blocked powder crosslinker comprising a polyisocyanate component containing the reaction product of bis(4-isocyanatocyclohexyl) methane and a diol comprising a component selected from the group consisting of 1,6-hexanediol, ethylene glycol, 1,4-butanediol, and trimethylol propane.

11. The powder crosslinker of Claim 10, wherein the polyisocyanate component further comprises hexamethylene diisocyanate isocyanurate, wherein the hexamethylene diisocyanate isocyanurate is present in an amount ranging from about 20 to about 80 wt %, based on the weight of the polyisocyanate component.

12. The powder crosslinker of composition of Claim 11, wherein the polyisocyanate component further contains a bis(4-isocyanatocyclohexyl) methane isocyanurate, an amount ranging from about 20 to about 80 wt %, based on the weight of the polyisocyanate component.

13. The powder crosslinker of Claim 10 further comprising an isocyanate-reactive component in sufficient amount to form a polyurethane powder coating composition.

14. The polyurethane powder coating composition of Claim 13, wherein isocyanate-reactive component is either
(1) a hydroxy-functional acrylate made from a component comprising monomers selected from the group consisting of acrylic acid, methacrylic acid, crotonic acid, maleic anhydride, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, glycidyl acrylate, glycidyl methacrylate, 2-isocyanatoethyl acrylate and 2-isocyanatoethyl methacrylate; or
(2) a hydroxy-functional polyester polyol comprising a component selected from the group consisting of reaction products of dihydric alcohols comprising a component selected from the group consisting of ethylene glycol, propylene glycol-(1,2) and -(1,3), butylene glycol-(1,4) and -(1,3), hexanediol-(1,6), octanediol-(1,8), neopentyl glycol, cyciohexanedimethanol (1,4-bis-hydroxymethylcyclohexane), 2-methyl-1,3-propane diol, 2,2,4-trimethyl-1,3-pentanediol, triethylene glycol, tetraethylene glycol, polyethylene glycol, dipropylene glycol, polypropylene glycol, dibutylene glycol and polybutylene glycol; and a dibasic carboxylic acid component comprising a component selected from the group consisting of succinic acid, adipic acid, suberic acid, azelaic acid, sebacic acid, phthalic acid, isophthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid and dimeric fatty acids such as oleic acid, dimethyl terephthalate and bis-gycoterephthalate.

15. A polyurethane powder crosslinker comprising:
(a) 1,2,4-triazole-blocked powder crosslinker component comprising a bis(isocyanatocyclohexyl) methane isocyanurate and an hexamethylene diisocyanate isocyanurate.

16. The powder crosslinker of Claim 15, wherein the amount of the bis(isocyanatocyclohexyl) methane isocyanurate is from about 80 to about 20 wt %, and the amount of the hexamethylene diisocyanate isocyanurate is from about 20 to about 80 wt%, based on the weight of the 1,2,4-triazole-blocked powder crosslinker component.

17. The powder crosslinker of Claim 15 further comprising an isocyanate-reactive component in a sufficient amount to form a polyurethane powder coating composition.

18. The polyurethane powder coating composition of Claim 17, wherein isocyanate-reactive component is either
(1) a hydroxy-functional acrylate made from a component comprising monomers selected from the group consisting of acrylic acid, methacrylic acid, crotonic acid, maleic anhydride, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, glycidyl acrylate, glycidyl methacrylate, 2-isocyanatoethyl acrylate and 2-isocyanatoethyl methacrylate; or
(2) a hydroxy-functional polyester polyol comprising a component selected from the group consisting of reaction products of dihydric alcohols comprising a component selected from the group consisting of ethylene glycol, propylene glycol-(1,2) and -(1,3), butylene glycol-(1,4) and -(1,3), hexanediol-(1,6), octanediol-(1,8), neopentyl glycol, cyclohexanedimethanot (1,4-bis-hydroxymethylcyclohexane), 2-methyl-1,3-propane diol, 2,2,4-trimethyl-1,3-pentanediol, triethyiene glycol, tetraethylene glycol, polyethylene glycol, dipropylene glycol, polypropylene glycol, dibutylene glycol and polybutylene glycol; and a dibasic carboxylic acid component comprising a component selected from the group consisting of succinic acid, adipic acid, suberic acid, azelaic acid, sebacic acid, phthalic acid, isophthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid and dimeric fatty acids such as oleic acid, dimethyl terephthalate and bis-gycoterephthalate.

19. A coating made from the polyurethane powder coating composition of Claim 13.

20. A coating made from the polyurethane powder coating composition of Claim 17.
